# EUROPEAN PATENT SPECIFICATION

(11) **EP 4 170 242 B1**
(45) Date of publication and mention of the grant of the patent: **16.09.2026**
(21) Application number: 21203459.9
(22) Date of filing: 19.10.2021
(51) Int. Cl.: F24C 15/20

(54) **SYSTEM COMPRISING A FUME EXTRACTION DEVICE AND A HOB**
SYSTEM UMFASSEND EINE DUNSTABZUGSVORRICHTUNG FÜR EIN KOCHFELD
SYSTÈME COMPRENANT UN DISPOSITIF D'EXTRACTION DE FUMÉE ET UNE PLAQUE DE CUISSON

(43) Date of publication of application: 26.04.2023
(73) Proprietor: ELECTROLUX APPLIANCES AKTIEBOLAG, 105 45 Stockholm (SE)
(72) Inventor: NEGRETTI, Peter, 47122 Forli (IT); VALPIANI, Nicola, 47122 Forli (IT); CHEN, Songliang, 47100 Forli (IT); BEKJAROVA, Milka, 47122 Forli (IT); RADHIMA, Ines, 47122 Forli (IT)
(74) Representative: Electrolux Group Patents

(56) References cited:
- WO-A1-2015/168243
- WO-A1-2020/112981
- US-B2- 9 677 772

## Description

The present invention lies in the field of food preparation and relates to a system or combination apparatus, which system comprises a hob with at least one cooking unit and a fume extraction device, as well as a method of operating a system or a combination apparatus, which system or combination apparatus comprises a hob and a fume extraction device.

Fume extraction devices, also labelled as "hoods", are increasingly used in the kitchen area for the preparation of food in order to extract and eliminate fumes, odors and other undesirable substances contaminating the air.

Fume extraction devices as known from the prior art are inter alia equipped with sensors in order to support the operation of the blower unit of a fume extraction device.

For example, a fume extraction device is described in United States Patent No. US 6,920,874 B1. The fume extraction device comprises an electronically controllable fan of variable speed and four air quality sensors for temperature, humidity, carbon monoxide and smoke for detecting hazardous substances in the air. An embedded control algorithm examines the output of the air quality sensors and trend information of measured signals and determines an instantaneous ventilation requirement. A fuzzy logic control algorithm controls the speed of the fan accordingly such that every combination of the conditions of the air quality sensors will have a unique associated fan speed level based on said ventilation requirement. An audible alarm is activated if contaminants in the air are detected that remain at a hazardous level for longer that predetermined time.

Further, a method of adjusting a commercial kitchen exhaust hood is described, for example, in Unites States Patent No. US 9,702,566 B2. The exhaust hood comprises a controller for controlling the hood in accordance with stored operating parameters and a manual override trigger input enables a user to manually trigger a maximum exhaust mode for the hood section. A thermal load monitoring system adjusts the blower, i.e. the exhaust flow based upon monitored thermal load on the basis of at least one temperature sensor for detecting temperature within the exhaust hood section. A VOC monitoring system (VOC is the abbreviation of "Volatile Organic Compound") with at least one VOC sensor triggers a maximum exhaust mode for the exhaust hood section when sensed VOCs exceed a VOC limit.

The international patent application WO 2015/168243 A1 discloses a sensor-enabled range hood system, which includes or is coupled to a control system and at least one sensor, in particular a proximity sensor, e. g. a motion sensor, in order to detect the presence or absence of a user for estimating attended or non-attended cooking, an infra-red radiation sensor in order to detect infra-red radiation emitted from a range top cooking surface, or a touch or capacitive sensor in order to detect the presence or absence of an object, such as a cooking utensil on said range top surface. The sensor-enabled range hood system includes a dynamic air flow management system for a modulation of the ventilation flow rate.

Finally, from United States Patent No. US 9,699,772 B2 an automatic controller for a hood is known, which comprises a number of air quality sensors, including temperature, smoke, humidity, gas and other sensors, as well as related electronic circuits and a microcontroller, in order to manage the dynamic timing of the fan control. Further, a motion detector for determining whether or not a person is in close proximity to the hood is included, so that an alarm volume is adjusted dependent on the signal of the motion detector.

The fume extraction devices known from the prior art have the disadvantage, for example, that a comparatively intensive manual input or operation from a user is necessary in order to operate the fume extraction device accordingly, especially in view of rapidly changing environmental conditions.

In addition, for example, the fume extraction devices as known from the prior art are not configured to operate more or less autonomously in certain situation, i.e. independently from a user input.

It is therefore an object of the present invention to provide a system or a combination apparatus, which system or combination apparatus comprises a hob and a fume extraction device, with an improved and extended functionality relating to the extraction of fumes and/or to operating conditions of the fume extraction device.

Further, it is an object of the present invention to provide an improved method of operating a system or a combination apparatus, which system or combination apparatus comprises a hob and a fume extraction device, that, for example, prevents faulty operation considering the current and/or the expected future air condition and thus the air quality, and safely operates the fume extraction device at least temporarily, even if a user is not currently on site.

The object of the present invention is solved by a system or combination apparatus according to independent claim 1 and by a method of operating a system or combination apparatus according to independent claim 8.

A first general aspect of the present invention relates to a system or a combination apparatus comprising a hob, which comprises at least one cooking unit, and a fume extraction device, wherein the fume extraction device comprises a blower unit, wherein the blower unit is configured for being variably controlled by means of or in response to at least one control signal, wherein the system or the combination apparatus comprises a sensor system or a sensor arrangement with at least one sensor unit, preferably several sensor units, being configured for detecting at least one parameter, particularly being in connection with or related to the hob, wherein the system or combination apparatus comprises a control unit being configured for controlling the blower unit via the at least one control signal, wherein the control unit is configured to activate and/or deactivate and/or variably control the blower unit in an automatic mode dependent on the detected at least one parameter. According to the present invention, the fume extraction device comprises a user interface unit or is configured for connection with a user interface unit. Said connection is preferably performed via a wired signal communication or more preferably via a wireless signal communication. The user interface unit is configured to at least activate and/or deactivate the automatic mode based on an initial activation of the automatic mode by a user by means of operating a control element. The control unit is configured to activate and/or deactivate and/or variably control the blower unit in the automatic mode dependent on motion data of a user detected by a motion sensor unit, which is comprised in the sensor system. The motion data detect the user in front of the hob and/or in the proximity of the fume extraction device. The present invention provides a fume extraction device of the system or the combination apparatus that is configured, for example, for reliable and more or less autonomous operation such that a user input or intervention by a user becomes unnecessary. For example, due to an auto-activation in the automatic mode of the fume extraction device, condensation of liquids (water and grease) and/or concentration of generated odours in the air can be avoided or at least effectively or significantly reduced.

The blower unit can be configured to be variably controlled by means of at least one control signal and the control unit can be configured, in dependence on or dependent on the at least one parameter, to execute at least one operation or at least one of the following on the blower unit: activating, deactivating and/or variably controlling. This allows, for example, the provision of a fume extraction device that is characterized by an operating mode in a closed-loop configuration and more or less in an autonomous manner.

The at least one parameter, which may be in connection with or related to the hob, can comprise a parameter of the air being above the hob, preferably during a cooking process at the hob.

The invention may also cover the solution of the at least one parameter being or comprising the user's motion data, which means that said motion data or information is the only one parameter being in connection with or related to the hob.

This allows, for example, the inclusion and consideration the existence or non-existence of a user, preferably during the operation of the fume extraction device and/or the hob and with regard to the further operation of the fume extraction device and/or the hob.

It is possible that the control unit can be configured to calculate the at least one control signal for variably controlling the blower unit as a function of the detected at least one parameter, and preferably as a function of detected motion data of a user of a motion sensor unit of the sensor system.

Variably controlling can comprise adjusting the rotational speed of a propeller of the blower unit that provides for the suction effect.

Variably controlling allows, for example, a dynamic or time-varying change of the functionality of the blower unit and/or an adaptation of the blower unit to current and/or future air conditions.

The at least one sensor unit can be configured for continuously detecting the at least one parameter at least intermittently or for at least a time period, preferably a predetermined or a calculated time period, and/or may be configured for transforming the detected at least one parameter into at least one parameter signal.

This allows, for example, also a variably operation of the at least one sensor unit of the sensor system.

It is possible that the fume extraction device can be configured for connection with the hob, preferably via a wired signal communication or more preferably via a wireless signal communication, to query operating status data of the at least one cooking unit, wherein the control unit may be configured for controlling the blower unit dependent on the queried operating status data of the at least one cooking unit until the detected at least one parameter reaches a target value or is in a range of target values.

This provides, for example, for consideration of the operating status or operating mode of the hob, preferably the at least one cooking unit.

The user interface unit may be configured to at least activate, preferably initially activate, and/or deactivate, preferably finally deactivate, the automatic mode, preferably dependent on operating status data of the blower unit and/or the detected at least one parameter.

Hence, the user can first and foremost activate and also finally deactivate the automatic mode of the fume extraction device conveniently via a user interface unit.

The at least one sensor unit may comprise or be configured as a temperature sensor, a humidity sensor and/or a VOC sensor, preferably a TVOC sensor, each being connected to the control unit.

The fume extraction device of the system or combination apparatus may be preferably integrated at least partially into the hob or arranged opposite the hob and/or arranged at a distance from the hob, preferably arranged laterally next to the hob.

A second general aspect of the present invention relates to a method of operating a system or a combination apparatus, which system or combination apparatus comprises a hob and a fume extraction device, in particular for drawing in cooking fumes of the hob. The hob has at least one cooking unit. The system or combination apparatus preferably includes a fume extraction device as disclosed herein. The fume extraction device comprises a blower unit, wherein preferably the blower unit is variably controlled by means of or in response to at least one control signal, wherein the system or the combination apparatus comprises a sensor system with at least one sensor unit being configured for detecting at least one parameter, particularly being in connection with or related to the hob, and wherein the fume extraction device communicates with or comprises a control unit, which controls the blower unit via the at least one control signal. The method comprises: detecting the at least one parameter by the at least one sensor unit; variably controlling the blower unit by the control unit via, more specifically in response to, the at least one control signal in an automatic mode dependent on the detected at least one parameter. The control signal may be generated processing said parameter. Specifically, the control of the blower unit is performed or executed in order to achieve a specific threshold, preferably in reasonable time, what may guarantee a favourable balance between power consumption of the entire appliance and its performance. With such means, environmental sustainability could be guaranteed. Favourably, an algorithm is provided for this process. The parameter signal may be considered and validated by the control signal.

The method further comprises: detecting at least one motion data of a user by a motion sensor unit of the sensor system being configured for detecting the motion data of a user; and variably controlling the blower unit by the control unit via the at least one control signal in the automatic mode dependent on the detected motion data.

The method even further comprises:
- according to a first alternative, monitoring the detection of motion data and/or the detection of the at least one parameter at least for a time period and/or until a criterion is met, wherein monitoring comprises: querying operating status data of the motion sensor unit and/or the at least one sensor unit; sending at least one test signal from the control unit to the motion sensor unit and/or to the at least one sensor unit; and/or returning at least one test signal from the motion sensor unit and/or from the at least one sensor unit to the control unit;
- according to a second alternative: validating the detected at least one motion data and/or the detected at least one parameter, preferably with a further detected motion data and/or a further detected at least one parameter; and adapting the at least one control signal dependent on the validated detected motion data and/or the validated detected at least one parameter.

Said first and second alternatives may be two individually valid or complementary aspects.

Validating can comprise comparing the detected at least one motion data and/or the detected at least one parameter with a predefined and/or specified stored motion data and/or at least one parameter of at least one reference operation mode of the fume extraction device.

It is also possible that the method comprises monitoring the blower unit, for example, via detecting noise generated by the blower unit.

It is possible that the method further comprises activating and/or deactivating the blower unit by the control unit, preferably at least when the detected at least one parameter has exceeded or has fallen below a target value, and/or in dependence of a change of the detected at least one parameter and/or in dependence of a change of detected motion data of a user at least over a time period.

The target value may be a predetermined or a calculated target value, and/or the time period can be a predetermined or a calculated time period.

Activating and/or deactivating the blower unit can comprise adjusting the rotational speed of a propeller of the blower unit.

It is possible that the method further comprises comparing the detected at least one motion data with at least a further detected motion data and/or comparing the detected at least one parameter with at least a further detected at least one parameter; and calculating of a motion deviation indicator of the compared detected at least one motion data and the further detected motion data and/or calculating of a parameter deviation indicator of the compared detected at least one parameter and the further detected at least one parameter.

The method can further comprise generating at least one control signal dependent on the calculated motion deviation indicator and/or the calculated parameter deviation indicator; and variably controlling the blower unit by the control unit via the generated at least one control signal, preferably in the automatic mode.

It is possible that the method comprises: establishing a connection with the hob, preferably via a wired signal communication or more preferably via a wireless signal communication; querying of operating status data of at least one cooking unit of the hob; and generating the at least one control signal dependent on the queried operating status data of the at least one cooking unit.

According to a further aspect of the present invention, the method can comprise: transmitting at least one control signal from a user interface unit to the control unit and setting the automatic mode dependent on operating status data of the blower unit and/or the detected at least one parameter.

In order to avoid repetition, features which are directed to the method according to the present invention and/or disclosed in connection therewith should also be considered as disclosed according to the fume extraction device and be claimable and vice versa.

The previously described examples and features of the present invention can be combined with each other in any way.

Further or other details and advantageous effects of the present invention are described in more detail below with reference to the attached figures:
- Fig. 1: illustrates schematically an arrangement of a hob and an example of a fume extraction device according to the present invention;
- Fig. 2: illustrates a flowchart of an example of the method according to the invention.

Identical or functionally equivalent components or elements are marked or labeled in the figures with the same reference signs. For their explanation, reference is also made to the description of other examples and/or figures in order to avoid repetition.

The following detailed description of the examples shown in the figures serves as a closer illustration or exemplification and is in no way intended to limit the scope of the present invention.

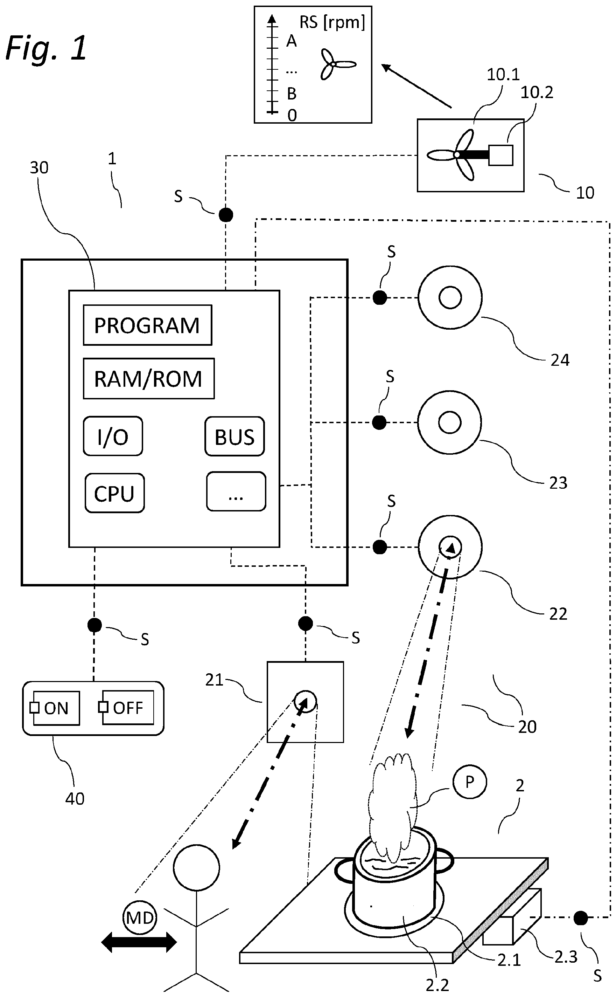

Figure 1 illustrates schematically an arrangement of a hob 2 and an example of a fume extraction device 1 according to the present invention.

The hob 2 can be, for example, a hob 2 as known from the prior art. The hob 2 can comprise at least one cooking unit 2.1. The at least one cooking unit 2.1 can be preferably configured as an induction cooking unit 2.1 comprising at least an induction coil and a power board (not shown in figure 1 for reasons of clarity). Alternatively, the at least one cooking unit 2.1 can be configured differently with regard to the principle of generating heat, for example, as heating coils, gas burners or the like. It is possible that the hob 2 comprises a plurality of cooking units 2.1, for example four cooking units 2.1.

As regards the illustration in figure 1, a pot or a vessel 2.2 with food to be prepared is placed on the at least one cooking unit 2.1. The at least one cooking unit 2.1 is illustrated in an operating mode of corresponding operating status according to which the food inside the vessel 2.2 is heated by the at least one cooking unit 2.1.

As a consequence of the cooking process and the heat treatment of the food in the vessel 2.2 via the at least one cooking unit 2.1, fumes with grease and/or odours and/or smallest particles are generated, which contaminate the surrounding air and negatively affect the quality of the air, at least in the area of the hob 2.

In order to remove fumes from the air again and to restore air quality, a fume extraction device 1 according to the present invention is provided.

Similar to the illustration of the hob 2, the example of the fume extraction device 1 of the present invention is illustrated schematically and will be described in further detail. Here, as with the hob 2, the most important components and elements, at least those relevant to the exemplary description of an example of the fume extraction device 1, are described. It is understood that the fume extraction device 1 naturally includes further components and elements such as grease filter elements, odour filter elements, flow channels, a protective grille, an air intake opening or the like.

The fume extraction device 1 according to the present invention is configured or adapted for the hob 2 with the at least one cooking unit 2.1.

As illustrated in figure 1, the fume extraction device 1 is arranged spatially separated from the hob 2. The fume extraction device 1 with an air intake unit (not illustrated in figure 1 for the sake of clarity) is preferably arranged opposite and/or at a distance from the hob 2, i.e. the at least one cooking unit 2.1. Alternatively, it is possible that the fume extraction device 1 is arranged laterally next to the hob 2 or opposite and/or at a distance from the hob 2. It is also possible as a further alternative that the fume extraction device 1 is at least partially integrated into the hob 2 and formed as a so-called "downdraft" fume extraction device 1.

The fume extraction device 1 comprises a blower unit 10. The blower unit 10 comprises a propeller 10.1 that provides for a suction effect for extracting fumes from the hob 2. The blower unit 10 of the fume extraction device 1 of the present invention is configured for variably controlling via at least one control signal S. In other words, the blower unit 10 is configured to be variably controlled by means of at least one control signal S, for example, via an interface (not illustrated in figure 1 for the sake of clarity). In order to realize such configuration of the blower unit 10, the blower unit 10 can preferably comprise an adjustable or variably controllable electric motor 10.2, such as a brushless DC motor, for driving the propeller 10.1 at corresponding rotational speed [rpm]. The blower unit 10 may further comprise own power electronics (not illustrated in figure 1 for the sake of clarity) in the form of a circuit board or a power board for variably controlling the motor 10.2. The circuit board or the power board may include or may be connected to an interface

The fume extraction device 1 according to the present invention further comprises a sensor system 20 in the form of a sensor arrangement 20. The sensor system 20 comprises at least one sensor unit 22, 23, 24 being configured for detecting at least one parameter P being at least in connection with the hob 2 or being at least related to the hob 2. The at least one sensor unit 22, 23, 24 can be preferably at least one parameter sensor unit 22, 23, 24. In detail, the sensor system 20 of the illustrated example of the fume extraction device 1 comprises a sensor unit 22 which includes or is configured as a temperature sensor 22, a sensor unit 23 which includes or is configured as a humidity sensor 23, and a sensor unit 24 which includes or is configured as a VOC sensor 24. As described above, the term "VOC" is an abbreviation for "Volatile Organic Compound". It is possible that the VOC sensor 24 may be preferably configured as a TVOC sensor 24 according to which the term "TVOC" is an abbreviation for "Total Volatile Organic Compound" as known from the prior art.

Each of the sensor units 22, 23, 24 may be configured for detecting at least one parameter P. As described above, the at least one parameter P may be at least in connection with the hob 2 or at least related to the hob 2 and may preferably comprise a detectable and/or measurable physical quantity and/or property.

The three sensors 22, 23, 24 of the present example of the fume extraction device 1 are configured for detecting each a different parameter P relating to the hob 2. In detail, the temperature sensor 22 is configured for detecting a temperature in the proximity of the at least one cooking unit 2.1 and/or preferably in at least the area above the vessel 2.2 as a temperature parameter P. The humidity sensor 23 may be configured for detecting a humidity in the proximity of the at least one cooking unit 2.1 and/or preferably in at least the area above the vessel 2.2. The VOC sensor 24 may be configured for detecting subtle changes in the air regarding or focussing, for example, specific compounds or concentration of compounds as parameter P. For example, the VOC sensor 24 may be configured as a photoionization detector ("PID") using ultraviolet light to identify VOCs. Hence, the at least one sensor unit 22, 23, 24 may comprise or may be configured as an optical sensor.

Each of the sensor units 22, 23, 24 or sensors 22, 23, 24 can be configured for continuously and/or intermittently detecting the respective at least one parameter P, for at least a time period, preferably a predetermined or a calculated time period. The sensor units 22, 23, 24 or sensors 22, 23, 24 may each comprise an interface and a circuit board or a power board (not illustrated in figure 1 for the sake of clarity) for transmission and/or processing of signals S representing or containing, for example, information related to the respective parameter P and/or information relating to controlling of the sensor unit 22, 23, 24 or sensor 22, 23, 24. The sensor units 22, 23, 24 may be configured for transforming the detected at least one parameter P into at least one parameter signal P.

The sensor units 22, 23 and 24 may be configured for transforming the detected parameter P into at least one parameter signal S. The at least one parameter signal S representing a temperature value or preferably a plurality of temperature values detected over a predetermined time period may, for example, be normalized to a reference value in order to be at least comparable and process able by the control unit 30 with at least a further at least one parameter signal S representing, for example, a humidity value or preferably a plurality of humidity values detected over a predetermined time period and normalized to a reference value, accordingly.

It is also possible that one single sensor unit 22, 23, 24 comprises at least two sensors such as a humidity sensor 23 and a VOC sensor 24 and thus a combination of sensors in one single unit.

In addition, the sensor system 20 may comprise a motion sensor 21. The motion sensor 21 is configured for detecting motion data MD of a user (see illustration in figure 1). The motion sensor 21 may be a motion sensor 21 as known from the prior art and may be able to detect at least the existence of a user in front of the hob 2 and/or in the proximity of the fume extraction device 1. Similar to the sensor units 22, 23, and 24, the motion sensor unit 21 may comprise an interface and a circuit board or a power board (not illustrated in figure 1 for the sake of clarity) for transmission and/or processing of signals S representing or containing, for example, information related to the existence or non-existence of a user, i.e. motion data MD. It is possible that the motion sensor 21 may be preferably comprise or configured as an infrared sensor.

The fume extraction device 1 according to the present invention further comprises a control unit 30. The control unit 30 may preferably comprise at least one central processing unit ("CPU") such as microcontroller, storage devices in the form of volatile and/or non-volatile storage device such as a RAM device (abbreviation for "Random-Access Memory") and/or a ROM device (abbreviation for "Read-Only Memory") and/or a SSS device (abbreviation for "Solid-State Storage") or the like.

The control unit 30 may further comprise input/output interfaces for signal communication S with at least the blower unit 10, the sensor units 22, 23 and 24 and the motion sensor unit 21. The control unit 30 and thus the fume extraction device 1 may also be configured for signal communication S with the hob 2 via communication module 2.3 of the hob 2 and a corresponding communication module or interface of the fume extraction device 1 (not illustrated in figure 1 for the sake of clarity). The signal communication S may be a wired signal communication or preferably a wireless signal communication, for example via infrared communication technology.

The control unit 30 may be further configured for querying or may query operating status data of the at least one cooking unit 2.1 of the hob 2.

According to the present invention, the control unit 30 is configured to activate and/or deactivate and/or variably control the blower unit 10 in an automatic mode dependent on the detected at least one parameter P.

In other words, the control unit 30 is configured, in dependence on or dependent on the at least one parameter P, to execute at least one operation or at least one of the following on the blower unit 10: activating, deactivating and/or variably controlling.

In addition, with regard to the example of the fume extraction device 1 as illustrated in figure 1, the control unit 30 may be configured to activate and/or deactivate and/or variably control the blower unit 10 in the automatic mode dependent on the detected motion data MD.

The automatic mode is preferably an autarkic or autonomous operating mode of the fume extraction device 1 in at least partially a closed-loop configuration, preferably without need of a user input. The automatic mode allows an independent activation and/or deactivation and/or control and/or regulation of the blower unit 10, with respect to the fume extraction device 1, depending on at least one detected parameter P or a plurality of detected parameters P as disclosed herein.

The control unit 30 may further be configured, for example, to determine, preferably calculate, a future control, i.e. a future control process or operation of the blower unit 10 from at least one detected parameter P, preferably detected over a past predetermined time interval.

The control unit 30 may be configured to calculate at least one control signal S for variably controlling the blower unit 10 as a function of the detected at least one parameter P or preferably several parameters such as temperature, humidity, compound or concentration of compounds, smoke (for example in case of fire), carbon dioxide (for example in case of fire), and/or, in general, air quality.

It is further possible that the control unit 30 is configured to calculate the at least one control signal S for variably controlling the blower unit 10 as a function of detected motion data MD of a user of the motion sensor unit 21 of the sensor system 20. Hence, the fume extraction device 1 is able to recognize the existence or non-existence of a user at least in the proximity of the hob 2 and/or the fume extraction device 1 and being operated accordingly considering information related to the user in form of motion data MD.

The present invention provides a fume extraction device 1 that is configured and/or equipped with components and elements which allow an operation of the fume extraction device 1 in an automatic mode. In other words, the fume extraction device 1 according to the present invention can be operated or is operated in a closed loop configuration with regard to the variably control of the blower unit 10, i.e. preferably the propeller 10.1 of the blower unit 10 dependent on the detected parameter P and preferably the detected motion data MD of a user. Hence, the propeller 10.1, i.e. the rotational speed of the propeller can be adjusted accordingly and preferably automatically taking into consideration conditions of the air being detected and evaluated by several different types of sensor units 22, 23, 24.

During a cooking process, the fume extraction device 1 according to the present invention is preferably configured to detect several parameters P such as humidity, temperature and/or specific compounds or concentration of compounds, preferably at least continuously, and in turn to control the blower unit 10 accordingly, preferably in a more or less autonomous manner. Hence, the quality of the air is improved until at least one of the detected at least one parameters P reaches a target value or is in a range of target values (for example, a valid range of temperature and/or humidity).

The fume extraction device 1 according to the present invention can further comprise a user interface unit 40 or is configured for connection with a user interface unit 40, preferably via a wired signal communication S or more preferably via a wireless signal communication S, for example via infrared communication technology.

The user interface unit 40 may be configured to at least initially activate and/or finally deactivate the automatic mode of the fume extraction device 1, preferably dependent on operating status data of the blower unit 10, i.e. the propeller 10.1 and/or the detected motion data MD and/or the detected at least one parameter P. In other words, the automatic mode of the fume extraction device 1 may initially be activated or set by a user by means of operating a control element such as a pushable button or a knob icon on a touch screen.

The present invention thus follows a holistic approach in the provided fume extraction device 1, according to which at least one or preferably several parameters P, more preferably temperature and humidity parameters P, detected by sensor units 22, 23 ,24 and representing the state of the environment of the hob 2, are used to operate the fume extraction device 1 in an automatic mode independently of a user input.

The present invention is described in further detail below with respect to a method of operating the fume extraction device 1.

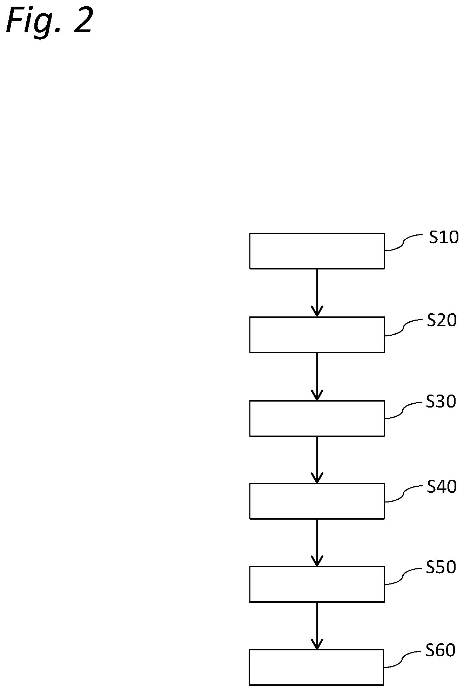

Figure 2 illustrates a flowchart of an example of the method according to the invention.

The present invention provides a method of operating a fume extraction device 1 for a hob 2 with at least one cooking unit 2.1, preferably a fume extraction device 1 as disclosed herein according to which the fume extraction device 1 preferably comprises a blower unit 10, wherein the blower unit 10 is configured for variably controlling via at least one control signal S, wherein the fume extraction device 1 comprises a sensor system 20 with at least one sensor unit 22, 23, 24 being configured for detecting at least one parameter P being in connection with the hob 2, and wherein the fume extraction device 1 comprises a control unit 30 being configured for controlling the blower unit 10 via the at least one control signal S.

In view of the above description of the components and elements of the fume extraction device 1, no further description will be made in the course of the description of the method in the following in order to avoid repetition.

Assuming that a cooking process on the hob 2 takes place or has been started, the method for operating the fume extraction device 1 is initiated or started in phase S10 according to which a user initially activates or sets the automatic mode of the fume extraction device 1 by means of operating a control element on a user interface unit 40 such as a pushable button on a haptic control panel or on a knob icon on a touch screen of the user interface unit 40.

In phase S20, the method can comprise detecting of the at least one parameter P by the at least one sensor unit 22, 23, 24.

Hence, parameters P like temperature, humidity and/or compounds or concentrations of compounds, are detected by the sensor units 22, 23, 24 in order to determine an operating status of the cooking process and/or the at least one cooking unit 2.1 of the hob 2.

In a further phase S30, motion data MD of a user can be detected additionally in order to further consider the existence or non-existence of a user in the course of the further course of the cooking process when operating the fume extraction device 1.

In phase S40, the method comprises activating the blower unit 10, i.e. the motor 10.2 and thus the propeller 10.1 with corresponding rotational speed, by the control unit 30 in order to provide an optimized suction effect.

Activating the blower unit 10 is preferably realized at least when the detected at least one parameter P such as temperature and/or humidity, has exceeded a target value, and/or in dependence of a change of the detected at least one parameter P and/or in dependence of a change of the detected motion data MD of a user at least over a time period.

The target value may be, for example, a predetermined or a calculated target value, and/or the time period may be, for example, a predetermined or a calculated time period. Hence, the target value may be a temperature value, a humidity value and/or a distance of the user towards the hob 2 (see figure 1) or the like.

Thus, more or less an automatic activation of the fume extraction device 1 in the automatic mode takes place only when preferably the air quality is in an appropriate contaminated condition. There is no need for further input of the user, for example.

With preferably the detected at least one parameter P or preferably several parameters P as disclosed herein, the method comprises in phase S50 variably and preferably automatically controlling the blower unit 10 by the control unit 30 via at least one control signal S in the automatic mode dependent on the detected at least one parameter P and, preferably in addition, on the detected motion data MD.

The rotational speed of the motor 10.2 and thus the propeller 10.1 is adjusted accordingly and in relation to detected parameters P and preferably detected motion data MD. Due to the sensor system 20, the fume extraction device 1 is configured to comprehensively detect the conditions of the air quality and variably control in more or less an autonomous manner the blower unit 10.

In phase S60, the method can comprise deactivating the blower unit 10, preferably when at least one detected parameter P or preferably at least two detected parameters P such as temperature and humidity have fallen below a target value.

Hence, the method is configured to more or less automatically deactivate the blower unit 10 once the air quality has reached a target value and/or a criterion, preferably for a predetermined time period, that allows deactivation of the blower unit 10.

It is possible that after deactivation of the blower unit 10 the fume extraction device 1 remains in a stand-by mode and being configured or being able to detect at least one parameter P once the hob 2. As soon as the hob 2 is reactivated and thus a new cooking process is started, automatic activation of the blower unit 10 can take place again by the method for operating the fume extraction device 1 according to the present invention.

The controlling of the blower unit 10 can be realized via transmitting at least one control signal S from a user interface unit 40 and/or from the control unit 30 and setting the automatic mode dependent on operating status data of the blower unit 10 and/or the detected motion data MD and/or the detected at least one parameter P.

It is further possible that the method comprises establishing a connection with the hob 2, preferably via a wired signal communication S or more preferably via a wireless signal communication S and querying of operating status data of at least one cooking unit 2.1 of the hob 2 to be considered for variable controlling the blower unit 10 via the control unit 30.

It is understood that at least two phases of the method according to the present invention may also be carried out at least partially in parallel and/or simultaneously.

The method according to the present invention may be, at least in part, a computer-implemented method realized via at least one algorithm. The present invention can be transferred to at least one computer program product as regards preferably the method or at least partially the method according to the present invention.

### List of Reference Signs

- 1: fume extraction device
- 2: hob
- 2.1: cooking unit
- 2.2: vessel
- 2.3: communication module
- 10: blower unit
- 10.1: propeller of the blower unit
- 10.2: motor
- 20: sensor system
- 21: motion sensor unit
- 22: temperature sensor
- 23: humidity sensor
- 24: VOC sensor
- 30: control unit
- 40: user interface unit

- P: parameter
- S: signal

## Claims

1. A system or a combination apparatus, which system or combination apparatus comprises a hob (2) and a fume extraction device (1), the fume extraction device (1) being configured to draw in cooking fumes of the hob (2), which has at least one cooking unit (2.1), wherein the fume extraction device (1) comprises a blower unit (10), wherein the blower unit (10) is configured for being variably controlled by means of or in response to at least one control signal (S),
wherein the system or the combination apparatus comprises a sensor system (20) with at least one sensor unit (22, 23, 24) being configured for detecting at least one parameter (P), particularly being in connection with the hob (2),
wherein the system or the combination apparatus comprises a control unit (30) being configured for controlling the blower unit (10) via the at least one control signal (S),
wherein the control unit (30) is configured to activate and/or deactivate and/or variably control the blower unit (10) in an automatic mode dependent on the detected at least one parameter (P),
**characterized in that**
the fume extraction device (1) comprises a user interface unit (40) or is configured for connection with a user interface unit (40), preferably via a wired signal communication (S) or more preferably via a wireless signal communication (S), wherein the user interface unit (40) is configured to at least activate and/or deactivate the automatic mode based on an initial activation of the automatic mode by a user by means of operating a control element, wherein the control unit (30) is configured to activate and/or deactivate and/or variably control the blower unit (10) in the automatic mode dependent on motion data (MD) of a user detected by a motion sensor unit (21), which is comprised in the sensor system (20), the motion data (MD) detecting the user in front of the hob (2) and/or in the proximity of the fume extraction device (1).

2. The system or combination apparatus according to claim 1,
wherein the control unit (30) is configured to calculate the at least one control signal (S) for variably controlling the blower unit (10) as a function of the detected at least one parameter (P), and preferably as a function of detected motion data (MD) of a user of a motion sensor unit (21) of the sensor system (20).

3. The system or combination apparatus according to any one of the preceding claims,
wherein the at least one sensor unit (22, 23, 24) is configured for continuously detecting the at least one parameter (P) at least intermittently or for at least a time period, preferably a predetermined or a calculated time period, and/or is configured for transforming the detected at least one parameter (P) into at least one parameter signal (S).

4. The system or combination apparatus according to any one of the preceding claims,
wherein the fume extraction device (1) is configured for connection with a hob (2), preferably via a wired signal communication (S) or more preferably via a wireless signal communication (S), to query operating status data of at least one cooking unit (2.1) of the hob (2), wherein the control unit (30) is configured for controlling the blower unit (10) dependent on the queried operating status data of the at least one cooking unit (2.1) until the detected at least one parameter (P) reaches a target value or is in a range of target values.

5. The system or combination apparatus according to any one of the preceding claims,
wherein the user interface unit (40) is configured to at least activate and/or deactivate the automatic mode dependent on operating status data of the blower unit (10) and/or the detected at least one parameter (P).

6. The system or combination apparatus according to any one of the preceding claims,
wherein the at least one sensor unit (22, 23, 24) comprises a temperature sensor, a humidity sensor and/or a VOC sensor, preferably a TVOC sensor, each being connected to the control unit (30).

7. The system or combination apparatus according to any one of the preceding claims,
wherein the fume extraction device (1) is preferably integrated at least partially into the hob (2) or arranged opposite the hob (2) and/or arranged at a distance from the hob (2), preferably arranged laterally next to the hob (2).

8. A method of operating a system or a combination apparatus according to one of the preceding claims, which system or combination apparatus comprises a hob (2) and a fume extraction device (1), in particular for drawing in cooking fumes of the hob (2) having at least one cooking unit (2.1), preferably a system or combination apparatus according to any one of the preceding claims,
wherein the fume extraction device (1) comprises a blower unit (10), wherein the blower unit (10) is variably controlled by means of or in response to at least one control signal (S), wherein the system or combination apparatus comprises a sensor system (20) with at least one sensor unit (22, 23, 24) being configured for detecting at least one parameter (P), particularly being in connection with the hob (2), and wherein the system or combination apparatus comprises a control unit (30), which controls the blower unit (10) via the at least one control signal (S), wherein the method comprises:
• Detecting the at least one parameter (P) by the at least one sensor unit (22, 23, 24);
• Variably controlling the blower unit (10) by the control unit (30) via the at least one control signal (S) in an automatic mode dependent on the detected at least one parameter (P);
• Detecting at least one motion data (MD) of a user by a motion sensor unit (21) of the sensor system (20);
• Variably controlling the blower unit (10) by the control unit (30) via the at least one control signal (S) in the automatic mode dependent on the detected motion data (MD);
and wherein the method further comprises:
• Monitoring the detection of motion data (MD) and/or the detection of the at least one parameter (P) at least for a time period and/or until a criterion is met, wherein monitoring comprises
- Querying operating status data of the motion sensor unit (21) and/or the at least one sensor unit (22, 23, 24);
- Sending at least one test signal (S) from the control unit (30) to the motion sensor unit (21) and/or to the at least one sensor unit (22, 23, 24); and/or
- Returning at least one test signal (S) from the motion sensor unit (21) and/or from the at least one sensor unit (22, 23, 24) to the control unit (30);
and/or
• Validating the detected at least one motion data (MD) and/or the detected at least one parameter (P), preferably with a further detected motion data (MD) and/or a further detected at least one parameter (P); and
• Adapting the at least one control signal (S) dependent on the validated detected motion data (MD) and/or the validated detected at least one parameter (P).

9. The method according to claim 8, further comprising:
• Activating and/or deactivating the blower unit (10) by the control unit (30), preferably at least when the detected at least one parameter (P) has exceeded or has fallen below a target value, and/or in dependence of a change of the detected at least one parameter (P) and/or in dependence of a change of detected motion data (MD) of a user at least over a time period.

10. The method according to claim 9,
wherein the target value is a predetermined or a calculated target value, and/or the time period is a predetermined or a calculated time period.

11. The method according to claim 9 or 10, wherein activating and/or deactivating the blower unit (10) comprises adjusting the rotational speed of a propeller (10.1) of the blower unit (10).

12. The method according to any one of the preceding claims 9 to 11, further comprising:
• Comparing the detected at least one motion data (MD) with at least a further detected motion data (MD) and/or comparing the detected at least one parameter (P) with at least a further detected at least one parameter (P); and
• Calculating a motion deviation indicator of the compared detected motion data (MD) and the further detected motion data (MD) and/or calculating of a parameter deviation indicator of the compared detected at least one parameter (P) and the further detected at least one parameter (P).

13. The method according to claim 12, further comprising:
• Generating at least one control signal (S) dependent on the calculated motion deviation indicator and/or the calculated parameter deviation indicator; and
• Variably controlling the blower unit (10) by the control unit (30) via the generated at least one control signal (S), preferably in the automatic mode.

14. The method according to any one of the preceding claims 8 to 13, further comprising:
• Establishing a connection with the hob (2), preferably via a wired signal communication (S) or more preferably via a wireless signal communication (S);
• Querying of operating status data of at least one cooking unit (2.1) of the hob (2); and
• Generating the at least one control signal (S) dependent on the queried operating status data of the at least one cooking unit (2.1).

15. The method according to any one of the preceding claims 8 to 14, further comprising:
• Transmitting at least one control signal (S) from a user interface unit (40) to the control unit (30) and setting the automatic mode dependent on operating status data of the blower unit (10) and/or the detected at least one parameter (P).

## Patentansprüche

1. System oder Kombinationsvorrichtung, wobei das System oder die Kombinationsvorrichtung ein Kochfeld (2) und eine Dunstabzugsvorrichtung (1) umfasst, wobei die Dunstabzugsvorrichtung (1) dazu ausgelegt ist, Kochdünste des Kochfelds (2), das mindestens eine Kocheinheit (2.1) aufweist, einzusaugen, wobei die Dunstabzugsvorrichtung (1) eine Gebläseeinheit (10) umfasst, wobei die Gebläseeinheit (10) dazu ausgelegt ist, mittels oder in Reaktion auf mindestens ein Steuersignal (S) variabel gesteuert zu werden,
wobei das System oder die Kombinationsvorrichtung ein Sensorsystem (20) mit mindestens einer Sensoreinheit (22, 23, 24) umfasst, die zum Erfassen mindestens eines Parameters (P) ausgelegt ist und insbesondere mit dem Kochfeld (2) in Verbindung steht,
wobei das System oder die Kombinationsvorrichtung eine Steuereinheit (30) umfasst, die zum Steuern der Gebläseeinheit (10) über das mindestens eine Steuersignal (S) ausgelegt ist,
wobei die Steuereinheit (30) dazu ausgelegt ist, die Gebläseeinheit (10) in einem automatischen Modus in Abhängigkeit von dem erfassten mindestens einen Parameter (P) zu aktivieren und/oder zu deaktivieren und/oder variabel zu steuern,
**dadurch gekennzeichnet, dass**
die Dunstabzugsvorrichtung (1) eine Benutzerschnittstelleneinheit (40) umfasst oder zur Verbindung mit einer Benutzerschnittstelleneinheit (40), vorzugsweise über eine drahtgebundene Signalkommunikation (S) oder besonders bevorzugt über eine drahtlose Signalkommunikation (S), ausgelegt ist, wobei die Benutzerschnittstelleneinheit (40) dazu ausgelegt ist, den automatischen Modus basierend auf einer anfänglichen Aktivierung des automatischen Modus durch einen Benutzer durch Betätigen eines Steuerelements zumindest zu aktivieren und/oder zu deaktivieren, wobei die Steuereinheit (30) dazu ausgelegt ist, die Gebläseeinheit (10) in dem automatischen Modus in Abhängigkeit von Bewegungsdaten (MD) eines Benutzers, die durch eine in dem Sensorsystem (20) umfasste Bewegungssensoreinheit (21) erfasst werden, zu aktivieren und/oder zu deaktivieren und/oder variabel zu steuern, wobei mittels der Bewegungsdaten (MD) der Benutzer vor dem Kochfeld (2) und/oder in der Nähe der Dunstabzugsvorrichtung (1) erfasst wird.

2. System oder Kombinationsvorrichtung nach Anspruch 1,
wobei die Steuereinheit (30) dazu ausgelegt ist, das mindestens eine Steuersignal (S) zum variablen Steuern der Gebläseeinheit (10) in Abhängigkeit von dem erfassten mindestens einen Parameter (P) und vorzugsweise in Abhängigkeit von durch eine Bewegungssensoreinheit (21) des Sensorsystems (20) erfassten Bewegungsdaten (MD) eines Benutzers zu berechnen.

3. System oder Kombinationsvorrichtung nach einem der vorhergehenden Ansprüche,
wobei die mindestens eine Sensoreinheit (22, 23, 24) zum kontinuierlichen Erfassen des mindestens einen Parameters (P) zumindest intermittierend oder für zumindest einen Zeitraum, vorzugsweise einen vorbestimmten oder einen berechneten Zeitraum, ausgelegt ist und/oder zum Transformieren des erfassten mindestens einen Parameters (P) in mindestens ein Parametersignal (S) ausgelegt ist.

4. System oder Kombinationsvorrichtung nach einem der vorhergehenden Ansprüche,
wobei die Dunstabzugsvorrichtung (1) zur Verbindung mit einem Kochfeld (2), vorzugsweise über eine drahtgebundene Signalkommunikation (S) oder besonders bevorzugt über eine drahtlose Signalkommunikation (S), ausgelegt ist, um Betriebsstatusdaten mindestens einer Kocheinheit (2.1) des Kochfelds (2) abzufragen,
wobei die Steuereinheit (30) dazu ausgelegt ist, die Gebläseeinheit (10) in Abhängigkeit von den abgefragten Betriebsstatusdaten der mindestens einen Kocheinheit (2.1) zu steuern, bis der erfasste mindestens eine Parameter (P) einen Zielwert erreicht oder in einem Bereich von Zielwerten liegt.

5. System oder Kombinationsvorrichtung nach einem der vorhergehenden Ansprüche,
wobei die Benutzerschnittstelleneinheit (40) dazu ausgelegt ist, den automatischen Modus in Abhängigkeit von Betriebsstatusdaten der Gebläseeinheit (10) und/oder von dem erfassten mindestens einen Parameter (P) zumindest zu aktivieren und/oder zu deaktivieren.

6. System oder Kombinationsvorrichtung nach einem der vorhergehenden Ansprüche,
wobei die mindestens eine Sensoreinheit (22, 23, 24) einen Temperatursensor, einen Feuchtigkeitssensor und/oder einen VOC-Sensor, vorzugsweise einen TVOC-Sensor, umfasst, die jeweils mit der Steuereinheit (30) verbunden sind.

7. System oder Kombinationsvorrichtung nach einem der vorhergehenden Ansprüche,
wobei die Dunstabzugsvorrichtung (1) vorzugsweise zumindest teilweise in das Kochfeld (2) integriert ist oder gegenüber dem Kochfeld (2) angeordnet ist und/oder in einem Abstand von dem Kochfeld (2) angeordnet ist, vorzugsweise seitlich neben dem Kochfeld (2) angeordnet ist.

8. Verfahren zum Betreiben eines Systems oder einer Kombinationsvorrichtung nach einem der vorhergehenden Ansprüche,
wobei das System oder die Kombinationsvorrichtung ein Kochfeld (2) und eine Dunstabzugsvorrichtung (1) umfasst, insbesondere zum Einsaugen von Kochdünsten des Kochfelds (2), das mindestens eine Kocheinheit (2.1) aufweist, vorzugsweise ein System oder eine Kombinationsvorrichtung nach einem der vorhergehenden Ansprüche,
wobei die Dunstabzugsvorrichtung (1) eine Gebläseeinheit (10) umfasst, wobei die Gebläseeinheit (10) mittels oder in Reaktion auf mindestens ein Steuersignal (S) variabel gesteuert wird, wobei das System oder die Kombinationsvorrichtung ein Sensorsystem (20) mit mindestens einer Sensoreinheit (22, 23, 24) umfasst, die zum Erfassen mindestens eines Parameters (P) ausgelegt ist und insbesondere mit dem Kochfeld (2) in Verbindung steht, und wobei das System oder die Kombinationsvorrichtung eine Steuereinheit (30) umfasst, die die Gebläseeinheit (10) über das mindestens eine Steuersignal (S) steuert, wobei das Verfahren Folgendes umfasst:
• Erfassen des mindestens einen Parameters (P) durch die mindestens eine Sensoreinheit (22, 23, 24);
• variables Steuern der Gebläseeinheit (10) durch die Steuereinheit (30) über das mindestens eine Steuersignal (S) in einem automatischen Modus in Abhängigkeit von dem erfassten mindestens einen Parameter (P);
• Erfassen mindestens eines Bewegungsdatums (MD) eines Benutzers durch eine Bewegungssensoreinheit (21) des Sensorsystems (20);
• variables Steuern der Gebläseeinheit (10) durch die Steuereinheit (30) über das mindestens eine Steuersignal (S) in dem automatischen Modus in Abhängigkeit von den erfassten Bewegungsdaten (MD);
und wobei das Verfahren ferner Folgendes umfasst:
• Überwachen der Erfassung von Bewegungsdaten (MD) und/oder der Erfassung des mindestens einen Parameters (P) mindestens für einen Zeitraum und/oder bis ein Kriterium erfüllt ist, wobei das Überwachen umfasst
- Abfragen von Betriebsstatusdaten der Bewegungssensoreinheit (21) und/oder der mindestens einen Sensoreinheit (22, 23, 24);
- Senden mindestens eines Testsignals (S) von der Steuereinheit (30) an die Bewegungssensoreinheit (21) und/oder an die mindestens eine Sensoreinheit (22, 23, 24); und/oder
- Zurückgeben mindestens eines Testsignals (S) von der Bewegungssensoreinheit (21) und/oder von der mindestens einen Sensoreinheit (22, 23, 24) an die Steuereinheit (30);
und/oder
• Validieren mindestens eines erfassten Bewegungsdatums (MD) und/oder des erfassten mindestens einen Parameters (P), vorzugsweise mit einem weiteren erfassten Bewegungsdatum (MD) und/oder mindestens einem weiteren erfassten Parameter (P); und
• Anpassen des mindestens einen Steuersignals (S) in Abhängigkeit von den validierten erfassten Bewegungsdaten (MD) und/oder von dem mindestens einen validierten erfassten Parameter (P).

9. Verfahren nach Anspruch 8, ferner umfassend:
• Aktivieren und/oder Deaktivieren der Gebläseeinheit (10) durch die Steuereinheit (30), vorzugsweise zumindest dann, wenn der erfasste mindestens eine Parameter (P) einen Zielwert überschritten oder unterschritten hat, und/oder in Abhängigkeit von einer Änderung des erfassten mindestens einen Parameters (P) und/oder in Abhängigkeit von einer Änderung erfasster Bewegungsdaten (MD) eines Benutzers zumindest über einen Zeitraum.

10. Verfahren nach Anspruch 9,
wobei der Zielwert ein vorbestimmter oder ein berechneter Zielwert ist und/oder der Zeitraum ein vorbestimmter oder ein berechneter Zeitraum ist.

11. Verfahren nach Anspruch 9 oder 10, wobei das Aktivieren und/oder Deaktivieren der Gebläseeinheit (10) das Einstellen der Drehzahl eines Propellers (10.1) der Gebläseeinheit (10) umfasst.

12. Verfahren nach einem der vorhergehenden Ansprüche 9 bis 11, ferner umfassend:
• Vergleichen mindestens eines erfassten Bewegungsdatums (MD) mit mindestens einem weiteren erfassten Bewegungsdatum (MD) und/oder Vergleichen des erfassten mindestens einen Parameters (P) mit mindestens einem weiteren erfassten Parameter (P); und
• Berechnen eines Bewegungsabweichungsindikators der verglichenen erfassten Bewegungsdaten (MD) und der weiteren erfassten Bewegungsdaten (MD) und/oder Berechnen eines Parameterabweichungsindikators des mindestens einen verglichenen erfassten Parameters (P) und des mindestens einen weiteren erfassten Parameters (P).

13. Verfahren nach Anspruch 12, ferner umfassend:
• Erzeugen mindestens eines Steuersignals (S) in Abhängigkeit von dem berechneten Bewegungsabweichungsindikator und/oder dem berechneten Parameterabweichungsindikator; und
• variables Steuern der Gebläseeinheit (10) durch die Steuereinheit (30) über das erzeugte mindestens eine Steuersignal (S), vorzugsweise in dem automatischen Modus.

14. Verfahren nach einem der vorhergehenden Ansprüche 8 bis 13, ferner umfassend:
• Herstellen einer Verbindung mit dem Kochfeld (2), vorzugsweise über eine drahtgebundene Signalkommunikation (S) oder besonders bevorzugt über eine drahtlose Signalkommunikation (S);
• Abfragen von Betriebsstatusdaten mindestens einer Kocheinheit (2.1) des Kochfelds (2); und
• Erzeugen des mindestens einen Steuersignals (S) in Abhängigkeit von den abgefragten Betriebsstatusdaten der mindestens einen Kocheinheit (2.1).

15. Verfahren nach einem der vorhergehenden Ansprüche 8 bis 14, ferner umfassend:
• Übertragen mindestens eines Steuersignals (S) von einer Benutzerschnittstelleneinheit (40) an die Steuereinheit (30) und Einstellen des automatischen Modus in Abhängigkeit von Betriebsstatusdaten der Gebläseeinheit (10) und/oder von dem erfassten mindestens einen Parameter (P).

## Revendications

1. Système ou appareil combiné, lequel système ou appareil combiné comprend une table de cuisson (2) et un dispositif d'extraction de fumées (1), le dispositif d'extraction de fumées (1) étant configuré pour aspirer des fumées de cuisson de la table de cuisson (2), laquelle possède au moins une unité de cuisson (2.1), le dispositif d'extraction de fumées (1) comprenant une unité de soufflante (10), l'unité de soufflante (10) étant configurée pour être commandée de manière variable au moyen d'au moins un signal de commande (S) ou en réponse à celui-ci,
le système ou l'appareil combiné comprenant un système de capteurs (20) doté d'au moins une unité de capteur (22, 23, 24) configurée pour détecter au moins un paramètre (P), en particulier en liaison avec la table de cuisson (2),
le système ou l'appareil combiné comprenant une unité de commande (30) configurée pour commander l'unité de soufflante (10) par l'intermédiaire de l'au moins un signal de commande (S),
l'unité de commande (30) étant configurée pour activer et/ou désactiver et/ou commander de manière variable l'unité de soufflante (10) dans un mode automatique en fonction de l'au moins un paramètre (P) détecté, **caractérisé en ce que**
le dispositif d'extraction de fumées (1) comprend une unité d'interface utilisateur (40) ou est configuré pour être connecté à une unité d'interface utilisateur (40), de préférence par l'intermédiaire d'une communication de signaux filaire (S) ou, de préférence encore, par l'intermédiaire d'une communication de signaux sans fil (S), l'unité d'interface utilisateur (40) étant configurée pour au moins activer et/ou désactiver le mode automatique sur la base d'une activation initiale du mode automatique par un utilisateur au moyen de l'actionnement d'un élément de commande, l'unité de commande (30) étant configurée pour activer et/ou désactiver et/ou commander de manière variable l'unité de soufflante (10) dans le mode automatique en fonction de données de mouvement (MD) d'un utilisateur détectées par une unité de capteur de mouvement (21), laquelle est comprise dans le système de capteurs (20), les données de mouvement (MD) détectant l'utilisateur devant la table de cuisson (2) et/ou à proximité du dispositif d'extraction de fumées (1).

2. Système ou appareil combiné selon la revendication 1,
dans lequel l'unité de commande (30) est configurée pour calculer l'au moins un signal de commande (S) pour commander de manière variable l'unité de soufflante (10) en fonction de l'au moins un paramètre (P) détecté et, de préférence, en fonction de données de mouvement (MD) détectées d'un utilisateur d'une unité de capteur de mouvement (21) du système de capteurs (20).

3. Système ou appareil combiné selon l'une quelconque des revendications précédentes,
dans lequel l'au moins une unité de capteur (22, 23, 24) est configurée pour détecter en continu l'au moins un paramètre (P) au moins de manière intermittente ou pendant au moins une période de temps, de préférence une période de temps prédéterminée ou calculée, et/ou est configurée pour transformer l'au moins un paramètre (P) détecté en au moins un signal de paramètre (S).

4. Système ou appareil combiné selon l'une quelconque des revendications précédentes,
dans lequel le dispositif d'extraction de fumées (1) est configuré pour être connecté à une table de cuisson (2), de préférence par l'intermédiaire d'une communication de signaux filaire (S) ou, de préférence encore, par l'intermédiaire d'une communication de signaux sans fil (S), afin de demander des données d'état de fonctionnement d'au moins une unité de cuisson (2.1) de la table de cuisson (2),
dans lequel l'unité de commande (30) est configurée pour commander l'unité de soufflante (10) en fonction des données d'état de fonctionnement demandées de l'au moins une unité de cuisson (2.1) jusqu'à ce que l'au moins un paramètre (P) détecté atteigne une valeur cible ou s'inscrive dans une plage de valeurs cibles.

5. Système ou appareil combiné selon l'une quelconque des revendications précédentes,
dans lequel l'unité d'interface utilisateur (40) est configurée pour au moins activer et/ou désactiver le mode automatique en fonction de données d'état de fonctionnement de l'unité de soufflante (10) et/ou de l'au moins un paramètre (P) détecté.

6. Système ou appareil combiné selon l'une quelconque des revendications précédentes,
dans lequel l'au moins une unité de capteur (22, 23, 24) comprend un capteur de température, un capteur d'humidité et/ou un capteur de composés organiques volatils, de préférence un capteur de composés organiques volatils totaux, chacun étant connecté à l'unité de commande (30).

7. Système ou appareil combiné selon l'une quelconque des revendications précédentes,
dans lequel le dispositif d'extraction de fumées (1) est de préférence intégré au moins partiellement dans la table de cuisson (2) ou agencé en vis-à-vis de la table de cuisson (2) et/ou agencé à distance de la table de cuisson (2), de préférence agencé latéralement à côté de la table de cuisson (2).

8. Procédé de fonctionnement d'un système ou d'un appareil combiné selon l'une des revendications précédentes,
lequel système ou appareil combiné comprend une table de cuisson (2) et un dispositif d'extraction de fumées (1), en particulier pour aspirer des fumées de cuisson de la table de cuisson (2) possédant au moins une unité de cuisson (2.1), de préférence un système ou un appareil combiné selon l'une quelconque des revendications précédentes,
le dispositif d'extraction de fumées (1) comprenant une unité de soufflante (10), l'unité de soufflante (10) étant commandée de manière variable au moyen d'au moins un signal de commande (S) ou en réponse à celui-ci, le système ou l'appareil combiné comprenant un système de capteurs (20) doté d'au moins une unité de capteur (22, 23, 24) configurée pour détecter au moins un paramètre (P), en particulier en liaison avec la table de cuisson (2), et le système ou l'appareil combiné comprenant une unité de commande (30), laquelle commande l'unité de soufflante (10) par l'intermédiaire de l'au moins un signal de commande (S), le procédé comprenant :
• la détection de l'au moins un paramètre (P) par l'au moins une unité de capteur (22, 23, 24) ;
• la commande de manière variable de l'unité de soufflante (10) par l'unité de commande (30) par l'intermédiaire de l'au moins un signal de commande (S) dans un mode automatique en fonction de l'au moins un paramètre (P) détecté ;
• la détection d'au moins une donnée de mouvement (MD) d'un utilisateur par une unité de capteur de mouvement (21) du système de capteurs (20) ;
• la commande de manière variable de l'unité de soufflante (10) par l'unité de commande (30) par l'intermédiaire de l'au moins un signal de commande (S) dans le mode automatique en fonction de la donnée de mouvement (MD) détectée ;
et le procédé comprenant en outre :
• la surveillance de la détection de données de mouvement (MD) et/ou la détection de l'au moins un paramètre (P) au moins pendant une période de temps et/ou jusqu'à ce qu'un critère soit satisfait, la surveillance comprenant
- la demande de données d'état de fonctionnement de l'unité de capteur de mouvement (21) et/ou de l'au moins une unité de capteur (22, 23, 24) ;
- l'envoi d'au moins un signal de test (S) de l'unité de commande (30) à l'unité de capteur de mouvement (21) et/ou à l'au moins une unité de capteur (22, 23, 24) ; et/ou
- le renvoi d'au moins un signal de test (S) de l'unité de capteur de mouvement (21) et/ou de l'au moins une unité de capteur (22, 23, 24) à l'unité de commande (30) ;
et/ou
• la validation de l'au moins une donnée de mouvement (MD) détectée et/ou de l'au moins un paramètre (P) détecté, de préférence avec une donnée de mouvement (MD) détectée supplémentaire et/ou au moins un paramètre (P) détecté supplémentaire ; et
• l'adaptation de l'au moins un signal de commande (S) en fonction de la donnée de mouvement (MD) détectée validée et/ou de l'au moins un paramètre (P) détecté validé.

9. Procédé selon la revendication 8, comprenant en outre :
• l'activation et/ou la désactivation de l'unité de soufflante (10) par l'unité de commande (30), de préférence au moins lorsque l'au moins un paramètre (P) détecté est passé au-dessus ou au-dessous d'une valeur cible, et/ou en fonction d'un changement de l'au moins un paramètre (P) détecté et/ou en fonction d'un changement de données de mouvement (MD) détectées d'un utilisateur au moins sur une période de temps.

10. Procédé selon la revendication 9,
dans lequel la valeur cible est une valeur cible prédéterminée ou calculée, et/ou la période de temps est une période de temps prédéterminée ou calculée.

11. Procédé selon la revendication 9 ou 10, dans lequel l'activation et/ou la désactivation de l'unité de soufflante (10) comprend le réglage de la vitesse de rotation d'une hélice (10.1) de l'unité de soufflante (10).

12. Procédé selon l'une quelconque des revendications 9 à 11 précédentes, comprenant en outre :
• la comparaison de l'au moins une donnée de mouvement (MD) détectée avec au moins une donnée de mouvement (MD) détectée supplémentaire et/ou la comparaison de l'au moins un paramètre (P) détecté avec au moins un paramètre (P) détecté supplémentaire ; et
• le calcul d'un indicateur d'écart de mouvement de la donnée de mouvement (MD) détectée et de la donnée de mouvement (MD) détectée supplémentaire comparées et/ou le calcul d'un indicateur d'écart de paramètre de l'au moins un paramètre (P) détecté et de l'au moins un paramètre (P) détecté supplémentaire comparés.

13. Procédé selon la revendication 12, comprenant en outre :
• la génération d'au moins un signal de commande (S) en fonction de l'indicateur d'écart de mouvement calculé et/ou de l'indicateur d'écart de paramètre calculé ; et
• la commande de manière variable de l'unité de soufflante (10) par l'unité de commande (30) par l'intermédiaire de l'au moins un signal de commande (S) généré, de préférence dans le mode automatique.

14. Procédé selon l'une quelconque des revendications 8 à 13 précédentes, comprenant en outre :
• l'établissement d'une connexion avec la table de cuisson (2), de préférence par l'intermédiaire d'une communication de signaux filaire (S) ou, de préférence encore, par l'intermédiaire d'une communication de signaux sans fil (S) ;
• la demande de données d'état de fonctionnement d'au moins une unité de cuisson (2.1) de la table de cuisson (2) ; et
• la génération de l'au moins un signal de commande (S) en fonction des données d'état de fonctionnement demandées de l'au moins une unité de cuisson (2.1).

15. Procédé selon l'une quelconque des revendications 8 à 14 précédentes, comprenant en outre :
• la transmission d'au moins un signal de commande (S) d'une unité d'interface utilisateur (40) à l'unité de commande (30) et le réglage du mode automatique en fonction de données d'état de fonctionnement de l'unité de soufflante (10) et/ou de l'au moins un paramètre (P) détecté.
